Europäisches Patentamt

European Patent Office

Office européen des brevets

(11) Veröffentlichungsnummer: **0 495 219 A2**

# EUROPÄISCHE PATENTANMELDUNG

(21) Anmeldenummer: **91121669.5**

(22) Anmeldetag: **18.12.91**

(51) Int. Cl.5: **B29C 45/00**, B29C 69/00

(30) Priorität: **16.01.91 DE 4101106**

(43) Veröffentlichungstag der Anmeldung:
**22.07.92 Patentblatt 92/30**

(84) Benannte Vertragsstaaten:
**AT BE CH DK ES FR GB GR IT LI NL SE**

(71) Anmelder: **Krauss-Maffei Aktiengesellschaft**
**Krauss-Maffei-Strasse 2**
**W-8000 München 50(DE)**

(72) Erfinder: **Bürkle, Erwin, Dr., Dipl.-Ing.**
**Am Bühel 3**
**W-8177 Bichl(DE)**
Erfinder: **Spötzl, Markus, Dipl.-Ing. (FH)**
**Allgäuerstrasse 103**
**W-8000 München 71(DE)**
Erfinder: **Zweig, Konrad, Dipl.-Wirtsching.**
**Germersheimerstrasse 5**
**W-8900 Augsburg(DE)**

(54) **Verfahren und Vorrichtung zum Herstellen laminierter Formteile.**

(57) Laminierte Formteile mit einer Grundschicht aus thermoplastischem Material und einer oder mehreren Deckschichten werden dadurch hergestellt, daß zuerst in einer Spritzgießform ein Formling aus thermoplastischem Material spritzgegossen wird, und anschließend die untere Formhälfte der Spritzgießform mit dem darin befindlichen, noch nicht erstarrten Formling unter eine obere Formhälfte einer Preßform gebracht wird, durch die die Deckschicht gegen die Oberseite des noch nicht erstarrten Formlings angepreßt und an diesen laminiert wird.

Fig. 1

Die Erfindung betrifft ein Verfahren zum Herstellen laminierter Formteile, die aus einer Grundschicht aus thermoplastischem Material und mindestens einer Deckschicht aus flexiblem Material bestehen, mittels einer eine untere und obere Formhälfte aufweisenden Preßform, wobei in einem ersten Schritt das thermoplastische Material in fließfähigem Zustand in die untere Formhälfte zur Bildung der Grundschicht eingebracht wird und dann vor dem vollständigen Erstarren der Grundschicht in einem zweiten Schritt die obere Formhälfte zusammen mit der mindestens einen Deckschicht gegen die untere Formhälfte gepreßt und dadurch die Deckschicht mit der Grundschicht verbunden wird.

Ein Verfahren dieser Art ist aus US-PS 4 873 045 bekannt. Das Verfahren, auf das sich die Erfindung bezieht, ist vorzugsweise, jedoch nicht ausschließlich zur Herstellung von Innenausrustungen für Kraftfahrzeuge vorgesehen, z.B. zur Herstellung von inneren Türverkleidungen, Armaturenverkleidungen u.dgl.. Die Grundschicht, die dem Formteil die gewünschte stabile dreidimensionale Form gibt, besteht aus in der gewünschten Form erstarrtem thermoplastischem Material; die Deckschicht kann aus einem beliebigen flexiblen Material, z.B. Gawebe, Leder, Kunstleder, d.h. Kunststoffmaterial mit Lederprägung, Schaumstoffolie od.dgl. bestehen. Besonders vorteilhaft ist ein Aufbau mit einer oberen Deckschicht aus lederartiger Kunststoffolie und einer unteren Deckschicht oder Polsterungsschicht aus einem nachgiebigen Material wie Schaumstoff. Durch das Verpressen mit dem noch nicht erstarrten, d.h. zumindest an der Oberfläche noch fließfähigen oder thermoplastischen Material, werden die Deckschicht oder die Deckschichten unlösbar mit der Grundschicht verbunden.

Bei dem bekannten Verfahren gemäß US-PS 4 873 045 erfolgt das Einbringen der Grundschicht in die untere Formhälfte durch Extrudieren, wobei mittels einer an einen Extruder angeschlossenen Schlitzdüse, die über die untere Formhälfte verfahren wird, eine der gewünschten Schichtdicke entsprechende Lage des thermoplastischem Materials auf der unteren Formhälfte abgelegt wird. Diese extrudierte Lage folgt aufgrund ihrer Plastizität und der Einwirkung der Schwerkraft nur relativ grob der Formkontur der unteren Formhälfte. Beim nachfolgenden zweiten Schritt, bei dem die obere Formhälfte zusammen mit der Deckschicht gegen die untere Formhälfte angepreßt wird, wird die extrudierte, noch nicht erstarrte Grundschicht zusätzlich gegen die Kontur der unteren Formhälfte gepreßt. Je nach der Beschaffenheit der Deckschicht kann diese aber nur mit einem begrenzten Druck beaufschlagt werden. In vielen Fällen kann dieser Druck unzureichend sein, um die noch nicht erstarrte Grundschicht hinreichend vollständig und mit hinreichender Genauigkeit gegen die Formkontur der unteren Formhälfte anzuformen, so daß die Formtreue an der von der Deckschicht abgewandten Unterseite der Grundschicht zu wünschen übrig läßt. Wenn das Profil der unteren Formhälfte sehr große Erhöhungen oder Vertiefungen aufweist, kann es beim Anpressen der extrudierten Grundschicht an dieses Profil außerdem zu unkontrollierten örtlichen Verringerungen der Schichtdicke kommen.

Der Erfindung liegt die Aufgabe zugrunde, ein Verfahren der genannten Art und eine Vorrichtung zu seiner Durchführung zu schaffen, die das Herstellen der laminierten Formteile mit hoher Formgenauigkeit insbesondere an der von der Deckschicht abgewandten Rückseite ermöglicht.

Zur Lösung dieser Aufgabe sieht die Erfindung ein Verfahren der eingangs genannten Art vor, welches dadurch gekennzeichnet ist, daß der erste Schritt als Spritzgießverfahren durchgeführt wird, bei dem die untere Formhälfte zusammen mit einem Formoberteil eine geschlossene Spritzgießform bildet, in deren Formhohlraum das thermoplastische Material eingespritzt wird, um einen Formling mit fertig geformter Unterseite zu bilden, und daß danach die untere Formhalfte zusammen mit den Formling von dem Formoberteil getrennt und für den zweiten Schritt mit der oberen Formhälfte der Preßform zusammengebracht wird.

Für die Erfindung wesentlich ist somit, daß ein und dieselbe untere Formhälfte in den beiden aufeinanderfolgenden Verfahrensschritten zwei verschiedene Funktionen übernimmt, nämlich einmal als Formunterteil einer geschlossenen Spritzgießform zu dienen und im zweiten Schritt die untere Formhälfte einer Preßform zu bilden.

Aufgrund der Durchführung des ersten Verfahrensschrittes im Spritzgießverfahren können auch Formteile mit sehr kompliziert geformter Rückseite mit sehr hoher Formtreue hergestellt werden.

In bevorzugter weiterer Ausgestaltung der Erfindung werden besondere Mittel angewendet, um ein vollständiges Ablösen des Formoberteils der Spritzgießform von der Oberseite des noch nicht vollständig erstarrten Formlings angewendet, um sicherzustellen, daß der Formling zur Gänze in der unteren Formhälfte verbleibt. Geeignete Mittel stehen dem Fachmann zur Verfügung, z.B. durch Anbringung eines geeigneten Trennmittels, wie Silikonöl od.dgl. auf die Oberfläche des Formoberteils, oder die Beschichtung des Formoberteils mit einem haftungsminderndem Material wie Teflon, Kohlenstoff od.dgl. Es kann auch das gesamte Formoberteil der Spritzgießform aus einem Material mit niedriger Oberflächenhaftung, wie z.B. speziell strukturiertem Kohlenstoff, hergestellt werden. Stattdessen oder zusätzlich können Maßnahmen an der unteren Formhälfte angewendet werden, um den spritzgegossenen, noch nicht erstarrten Formling beim öffnen der Spritzgießform an der unteren Formhälfte festzuhalten, z.B. in Form von Hinterschneidungen insbesondere im Bereich der Angüsse.

Die genaue Art der Durchführung des Spritzgießens beim ersten Verfahrensschritt hängt im einzelnen von der Formgebung und Größe des herzustellenden Formteils, und damit des zu spritzenden Formlings ab. Bei Formlingen relativ kleiner Abmessungen kann ein ganz gewöhnlicher Spritzgießvorgang über einen einzigen Angußkanal ohne besondere Vorkehrungen durchgeführt werden. Handelt es sich um einen Formling von großen Flächenabmessungen, aber sehr geringer Dicke, dann besteht die Gefahr, daß das an einem z.B. zentralen Anguß zugeführte Kunststoffmaterial, das sich im Formhohlraum verteilen muß, bereits erstarrt, bevor es die Randbereiche des Formhohlraums erreicht hat. In diesem Fall müssen besondere Maßnahmen angewandt werden, um das Material am vorzeitigen Erstarren im Formhohlraum zu hindern. Eine Möglichkeit besteht darin, das Material über einen oder mehrere beheizte Angußkanale, sogenannte Hot-Runner, dem Formhohlraum zuzuführen. Eine andere Möglichkeit besteht darin, den Spritzgießvorgang als sogenanntes Spritzprägen durchzuführen. Dabei werden die beiden Formhälften des tauchkolbenartig ausgebildeten Formwerkzeugs zunächst auf einen größeren als den endgültigen Abstand eingestellt, so daß der Formling zunächst mit größerer als der endgültigen Wanddicke gespritzt wird. Anschließend werden die beiden Formhälften vollständig gegeneinander gepreßt, um den spritzgegossenen Formling auf die endgültige geringere Wanddicke fertigzuformen. Solche Verfahrensabläufe sind dem Fachmann bekannt und sollen erfindungsgemäß von dem Begriff "Spritzgießen" umfaßt sein.

Eine Vorrichtung zur Durchführung des erfindungsgemäßen Verfahrens weist eine Preßform mit unterer und oberer Formhälfte, eine Einrichtung zum Einbringen von thermoplastischem Kunststoff in die untere Formhälfte, und eine Preßvorrichtung zum Anpressen der oberen Formhälfte unter Zwischenfügung einer Deckschicht gegen die untere Formhälfte auf, und eine solche Vorrichtung ist erfindungsgemäß dadurch gekennzeichnet, daß die untere Formhälfte zusammen mit einem Formoberteil eine geschlossene Spritzgießform bildet, daß die Einrichtung zum Einbringen des thermoplastischen Materials als Spritzgießmaschine ausgebildet ist, die an die Spritzgießform anschließbar ist, und daß die untere Formhälfte nach Trennung vom Formoberteil mit der oberen Formhälfte der Preßform zusammenführbar ist.

Eine Ausführungsform der Erfindung wird im folgenden anhand der Zeichnung näher erläutert.

Es zeigt :

Fig. 1 schematisch eine Seitenansicht der Vorrichtung mit geschlossener Spritzgießform und Preßform im Schnitt;

Fig. 2 die gleiche Seitenansicht wie Fig. 1, jedoch mit geöffneter Spritzgießform und Preßform;

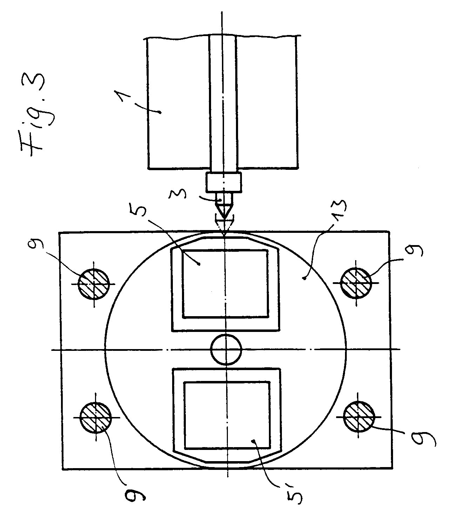

Fig. 3 eine Draufsicht auf die unteren Formhälften der Vorrichtung nach Fig. 1 und 2.

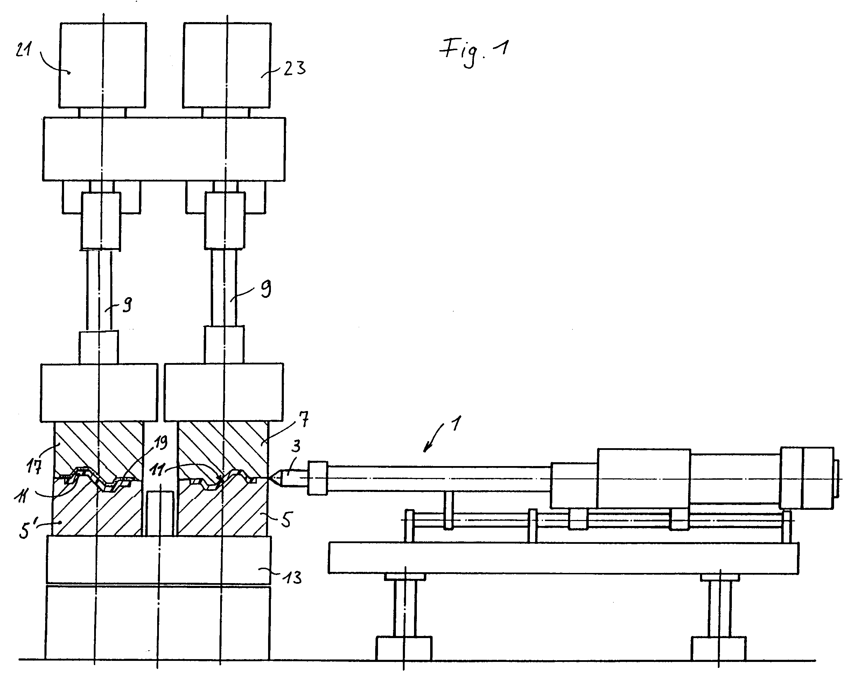

In Fig. 1 ist eine Spritzgießmaschine 1 dargestellt, die von üblicher Bauart ist und nicht näher erläutert wird. Der Spritzkopf 3 der Spritzgießmaschine 1 ist an ein Spritzgießwerkzeug anschließbar, das aus einer unteren Formhälfte 5 und einem heb- und senkbaren Formoberteil 7 besteht, das an Führungssäulen 9 geführt und mit einer Antriebsvorrichtung 23 heb- und senkbar ist. Im geschlossenen Zustand bilden die untere Formhälfte 5 und das Formoberteil 7 einen geschlossenen Formhohlraum, in den mittels des Spritzkopfes 3 thermoplastischer Kunststoff einspritzbar ist, um einen Formling 11 von gewünschter Formgebung herzustellen. Der Formling 11 hat bei dem dargestellten Beispiel etwa konstante Wanddicke. Ein besonderer Vorteil des erfindungsgemäßen Verfahrens besteht aber darin, daß auch Formteile herstellbar sind, deren Grundschicht, d.h. der durch Spritzgießen hergestellte Formling 11, auch örtlich unterschiedliche Wanddicke, insbesondere an seiner Unterseite angeformte Vorsprünge, Stege od.dgl. aufweisen kann.

Die Angußkanäle, durch die der thermoplastische Kunststoff aus dem Spritzkopf 3 in den Formhohlraum gelangt, ist in Fig. 1 nicht dargestellt, da die Anordnung solcher Angußkanäle dem Fachmann bekannt ist. Die Angußkanäle können in der Trennfuge zwischen der unteren Formhälfte 5 und dem Formoberteil verlaufen, oder aber in die untere Formhälfte 5 oder das Formoberteil 7 eingearbeitet sein.

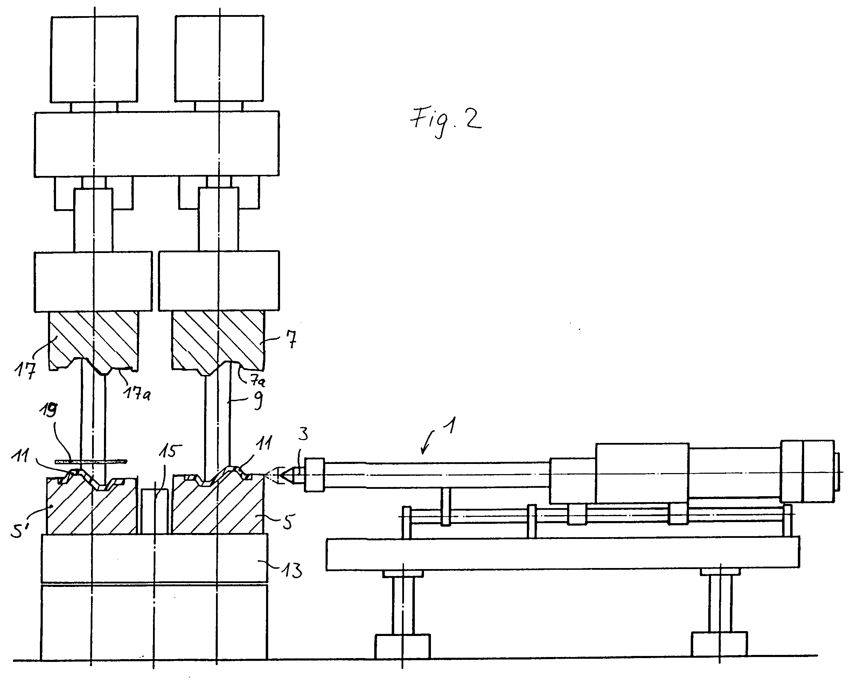

Nach Beendigung des Spritzgießens des Formlings 11 wird der Spritzkopf 7 von dem Formwerkzeug weggefahren und das Formoberteil 7 angehoben, wie in Fig. 2 dargestellt. Bei diesem öffnen des Formwerkzeugs verbleibt der Formling 11 in der unteren Formhälfte 5. Die untere Formhälfte 5 ist auf einem Karuselltisch 13 angeordnet, der um die vertikale Achse 15 drehbar ist. Durch Drehung um 180° wird die untere Formhälfte mit dem darin befindlichen, noch nicht erstarrten Formling 11 in die Stellung 5' nach Fig. 2 gebracht, wo sie sich unter einer oberen Formhälfte 17 befindet und mit dieser zusammen eine Preßform bildet. In dieser Stellung wird auf den Formling 11 eine Deckschicht 19 aus flexiblem Material aufgelegt. Bei dieser Deckschicht kann es sich um ein im Prinzip beliebiges flexibles Material handelt, z.B. Gewebe, Leder oder Kunstleder, Schaumstoff od.dgl., oder eine zwei- oder mehrschichtige Kombination aus solchen Materialien. Man kann die Deckschicht 19, anstatt sie auf den Formling 11 aufzulegen, auch in geeigneter Weise an der Unterseite der oberen Formhälfte 17 befestigen.

Durch Absenken der oberen Formhälfte 17 mittels einer Antriebsvorrichtung 21 wird die Deckschicht 19 gegen die Oberseite des noch nicht erstarrten Formlings 11 gepreßt und mit diesem verbunden, wie in Fig. 1 links dargestellt ist.

Vorzugsweise sind auf dem Karuselltisch 13, wie dargestellt, zwei identische untere Formhälften 5, 5, angeordnet. Jeweils eine dieser unteren Formhälften bildet zusammen mit dem Formoberteil 7 das Spritzgießwerkzeug, während gleichzeitig die andere untere Formhälfte 5' mit der oberen Formhälfte 17 der Preßform zusammenwirkt. Auf diese Weise kann in jedem Arbeitstakt der Maschine sowohl ein Formling 11 durch Spritzgießen geformt und gleichzeitig ein im vorherigen Takt geformter Formling 11 mit der Deckschicht 19 verpreßt werden.

Die Formkontur 17a an der Unterseite der oberen Preßformhälfte 17 muß gegenüber der durch die Kontur 7a des Formoberteils 7 gebildeten Oberseite des Formlings 11 um soweit zurückgesetzt sein, wie es der Dicke der aufzulaminierenden Deckschicht 19 entspricht. Ist die Deckschicht sehr dünn und damit der Dickenunterschied zwischen dem Formling 11 und dem fertig laminierten Formteil sehr gering, so ist es denkbar, das Formoberteil 7 der Spritzgießform auch als obere Formhälfte der Preßform für das Laminieren zu verwenden. In diesem Fall braucht die Vorrichtung nur eine untere Formhälfte 5 und das Formoberteil 7 aufzuweisen, die zweite untere Formhälfte 5' und die obere Formhälfte 17 können entfallen.

Wie bereits erwähnt ist es vorteilhaft besondere Maßnahmen vorzusehen, um ein vollständiges Ablösen des Formoberteils 7 von dem noch nicht erstarrten Formling 11, und dessen vollständiges Verbleiben in der unteren Formhälfte 5 sicherzustellen. Solche Maßnahmen sind dem Fachmann an sich bekannt. Man kann ein Trennmittel auf die Formfläche 7a des Formoberteils 7 aufbringen oder diese Formfläche mit einem haftungsmindernden Material wie Teflon, Kohlenstoff od.dgl. bleibend beschichten oder das gesamte Formoberteil 7 aus einem entsprechenden Material, z.B. kohlefaserverstärktem Kohlenstoff, herstellen. Zusätzlich oder alternativ dazu können Maßnahmen zum Festhalten des Formlings in der unteren Formhälfte 5 darin bestehen, daß deren Formhohlraum und/oder die Angußkanäle mit geeigneten Hinterschneidungen versehen werden. Auch die Anwendung von Vakuum zum zeitweisen Festhalten des Formlings in der unteren Formhälfte 5 ist möglich.

Die untere Formhälfte 5 ist selbstverständlich mit einem üblichen Auswerfersystem (nicht dargestellt) versehen, um nach dem völligen Erstarren des Formlings 5 mit der darauf laminierten Deckschicht 19 das fertige Formteil aus der unteren Formhälfte 5 auszustoßen, wobei hinterschnittene Angüsse od.dgl. abgebrochen werden können.

**Patentansprüche**

1. Verfahren zum Herstellen laminierter Formteile, die aus einer Grundschicht aus thermoplastischen Material und mindestens einer Deckschicht bestehen, mittels einer eine untere und obere Formhälfte (5, 17) aufweisenden Preßform wobei in einem ersten Schritt das thermoplastische Material in fließfähigem Zustand in die untere Formhälfte (5) zur Bildung der Grundschicht eingebracht wird und dann vor dem vollständigen Erstarren der Grundschicht in einem zweiten Schritt die obere Formhälfte (17) zusammen mit der mindestens einen Deckschicht (19) gegen die untere Formhälfte gepreßt und dadurch die Deckschicht (19) mit der Grundschicht verbunden wird, dadurch **gekennzeichnet,** daß der erste Schritt als Spritzgießverfahren durchgeführt wird, bei dem die untere Formhälfte (5) zusammen mit einem Formoberteil (7) eine geschlossene Spritzgießform bildet, in deren Formhohlraum das thermoplastische Material eingespritzt wird, um einen Formling (11) mit fertig geformter Unterseite zu bilden, und daß danach die untere Formhälfte (5) zusammen mit dem Formling (11) von dem Formoberteil (7) getrennt und für den zweiten Schritt mit der oberen Formhälfte (17) der Preßform zusammengebracht wird.

2. Verfahren nach Anspruch 1 , dadurch **gekennzeichnet,** daß Mittel zum vollständigen Ablösen des Formoberteils (7) von der Oberseite des noch nicht vollständig erstarrten Formlings (11) angewendet werden.

3. Verfahren nach Anspruch 1 oder 2 , dadurch **gekennzeichnet,** daß das Spritzgießen als Spritzprägevorgang durchgeführt wird, bei dem die untere Formhälfte (5) und das Formoberteil (7) während des Einspritzens des the_moplastischen Materials noch nicht vollständig aneinander angenähert und/oder noch nicht mit dem vollen Schließdruck beaufschlagt sind und nach beendetem Einspritzen mit dem endgültigen Schließdruck gegeneinander gedrückt werden.

4. Vorrichtung zur Durchführung des Verfahrens nach einem der Ansprüche 1 bis 3 , mit einer Preßform aus unterer und oberer Formhälfte (5, 17), einer Einrichtung zum Einbringen von thermoplastischem Kunststoff in die untere Formhälfte (5) und einer Preßvorrichtung (21) zum Anpressen der oberen Formhälfte (17) unter Zwischenfügung der Deckschicht (19) gegen die untere Formhälfte (5) , dadurch **gekennzeichnet,** daß die untere Formhälfte (5) zusammen mit einem Formoberteil (7) eine geschlossene Spritzgießform bildet, daß die Einrichtung zum Einbringen des thermoplastischen Materials als Spritzgießmaschine (1) ausgebildet ist, deren Spritzkopf (3) an die Spritzgießform anschließbar ist, und daß die untere Formhälfte (5) nach Trennung vom Formoberteil (7) mit der oberen Formhälfte (17) der Preßform zusammenführbar ist.

5. Vorrichtung nach Anspruch 4 , dadurch **gekennzeichnet,** daß zwei untere Formhälften (5, 5') auf einem bewegbaren Träger, insbesondere einem drehbaren Karusselltisch angeordnet sind, der zwischen zwei Stellungen bewegbar ist, in denen die eine untere Formhälfte (5) mit dem Formober eil (7) der Spritzgießform und gleichzeitig die andere untere Formhälfte (5') mit der oberen Formhälfte (17) der Preßform zusammenwirkt, bzw. umgekehrt.

Fig. 1

Fig. 2

Fig. 3

EP 0 495 219 A2